Europäisches Patentamt

European Patent Office

Office européen des brevets

(11) Veröffentlichungsnummer: **0 451 524 A1**

# (12) EUROPÄISCHE PATENTANMELDUNG

(21) Anmeldenummer: 91103827.1

(22) Anmeldetag: 13.03.91

(51) Int. Cl.⁵: **B27K 3/50**, B27K 5/00, B27K 3/34

(30) Priorität: 06.04.90 CH 1167/90

(43) Veröffentlichungstag der Anmeldung:
16.10.91 Patentblatt 91/42

(84) Benannte Vertragsstaaten:
AT BE DE DK FR GB IT NL SE

(71) Anmelder: ACIMA, Aktiengesellschaft für Chemische Industrie Im Ochsensand

CH-9470 Buchs SG(CH)

(72) Erfinder: Tscholl, Heinz-Peter, Dr.
Bogenstrasse 10
CH-9470 Werdenberg SG(CH)
Erfinder: Marx, Hans-Norbert
Turkenlouisstrasse 5
W-7580 Bühl-Vimbuch(DE)

(54) Verfahren zur Herstellung von Holzschutzmitteln.

(57) Der Zusatz von 2 - 30% lösemittellöslicher Metallseifen in holzschützenden Zubereitungen, wie Anstrichstoffen und Grundierungen, bewirkt eine wesentliche Verbesserung der bioziden Tiefenwirkung im Holz und führt gleichzeitig zu einer Stabilisierung der organischen Wirkstoffe gegen die Einwirkung von Licht und Feuchtigkeit. Zudem werden eine Verminderung der Wirkstoffauswaschungen und eine starke Hydrophobierung der Holzoberfläche erreicht.

Es ist bekannt, daß Metallseifen in Anstrichstoffen zum Zwecke der Trocknungsbeschleunigung und als Dispergierhilfe eingesetzt werden können. Ebenso können Verlauf und andere Oberflächeneigenschaften durch Metallseifen beeinflußt werden. Sinngemäß gilt dies auch für Anstrichstoffe und Grundierungen, die zum Schutze von Holz Zusätze geeigneter Fungizide und Insektizide enthalten. Der Gehalt entsprechender Metallseifen beträgt im allgemeinen 0.1 - 2%, bezogen auf die anwendungsfertige Zubereitung.

Überraschenderweise wurde nun gefunden, daß der Zusatz von 2% - 30% Metallseife zu holzschützenden Anstrichstoffen und Grundierungen eine wesentliche und nicht erwartete Verbesserung der Eigenschaften mit sich bringt.

Bei den erfindungsgemäßen Metallseifen handelt es sich um Metallcarboxilate aus Carbonsäuren, deren Kettenlänge so bemessen sein muß, daß eine ausreichende Löslichkeit in organischen Lösungsmitteln, insbesondere in aliphatischen und aromatischen Benzinfraktionen (Lackbenzine) gegeben ist.

Der Zusatz von Metallseifen in der erfindungsgemäßen Größenordnung von 2% - 30% hat folgende herausragende Vorteile.

A) Die Eindringung der Wirkstoffe (Fungizide und Insektizide) in das zu schützende Holz wird um den Faktor 2 - 5 erhöht. Damit wird eine Verbesserung der Tiefenwirkung erzielt, so daß später auftretende Trockenrisse keine ungeschützten Holzzonen freilegen. Gleichzeitig werden die Wirksubstanzen soweit im Holz nach innen verlagert, daß der Zugriff von UV-Licht auf die im allgemeinen lichtempfindlichen organischen Wirkstoffe reduziert wird und eine höhere Langzeitwirkung resultiert.

B) Die Feuchtigkeits- bzw. Wasseraufnahme des Holzes wird durch die hydrophobierende Eigenschaften der Metallseifen erheblich reduziert. Dadurch wird eine Dimensionsstabilisierung des behandelten Holzes erreicht, die Quell- und Schwindbewegungen führen nicht oder nur in geringem Maße zur Ausbildung von Rissen in der Oberfläche des Holzes.

Außerdem werden die im allgemeinen feuchte-empfindlichen organischen Wirkstoffe durch den Zusatz der Metallseifen wirksam vor Hydrolyse oder anderer Zersetzung und Auswaschung geschützt.

## Beispiel 1 - Bläueschutzgrundierung

    0.5 % Dichlofluanid

    0.1 % Permethrin

  10.0 % Fischölalkydharz (berechnet 100%)

    5.0 % Dibutylphthalat

  <u>84.4 %</u> Lackbenzin, Siedebereich 180 - 220°C

100.0 %

Eindringtiefe (biologische Prüfung) :
Dichlofluanid    1.1 - 1.6 mm
Permethrin    1.0 - 2.1 mm

## Beispiel 2 - Bläueschutzgrundierung erfindungsgemäß

    0.5 % Dichlofluanid

    0.1 % Permethrin

  10.0 % Fischölalkydharz (berechnet 100%)

    5.0 % Dibutylphthalat

  10.0 % Calciumethylhexanoat (berechnet 100%)

  <u>74.4 %</u> Lackbenzin, Siedebereich 180 - 220°C

100.0 %

EP 0 451 524 A1

Eindringtiefe (biologische Prüfung) :
Dichlofluanid     3.2 - 4.8 mm
Permethrin        3.5.- 5.0 mm

## Beispiel 3 - Holzschutzlasur

```
  0.5 % Dichlofluanid
  0.3 % Lindan
 20.0 % Leinölalkydharz (berechnet 100%)
  5.0 % Eisenoxidpaste
  1.0 % mikronisiertes Wachs
 73.2 % Lackbenzin, Siedebereich 180 - 220°C
100.0 %
```

Wasseraufnahme eines zweimal gestrichenen Holzprobekörpers nach dreitägiger Lagerung unter Wasser: 23% (Gewichtszunahme).

## Beispiel 4 - Holzschutzlasur   erfindungsgemäß

```
  0.5 % Dichlofluanid
  0.3 % Lindan
 20.0 % Leinölalkydharz (berechnet 100%)
  5.0 % Eisenoxidpaste
  1.0 % mikronisiertes Wachs
 12.0 % Eisenoktoat (berechnet 100%)
  3.0 % Zinkoktoat (berechnet 100%)
 58.2 % Lackbenzin, Siedebereich 180 - 220°C
100.0 %
```

Wasseraufnahme eines zweimal gestrichenen Holzprobekörpers nach dreitägiger Lagerung unter Wasser: 3,2% (Gewichtszunahme).

## Beispiel 5 - Holzschutzgrundierung

```
  0.5 % Jodpropinylbutylcarbamat (IPBC)
  0.5 % Tri-n-butylzinnoxid (TBTO)
  5.0 % Kohlenwasserstoffharz
 12.0 % Aromatenbenzin, Siedebereich 180 - 220°C
 82.0 % Lackbenzin, Siedebereich 180 - 220°C)
100.0 %
```

Wasseraufnahme von Holzprobekörpern, die im Doppelvakuumverfahren behandelt wurden, nach dreitä-

3

giger Lagerung unter Wasser: 18.3% (Gewichtszunahme).

## Beispiel 6 - Holzschutzgrundierung  erfindungsgemäß

```
  0.5 %  Jodpropinylbutylcarbamat (IPBC)
  0.5 %  Tri-n-butylzinnoxid (TBTO)
  5.0 %  Kohlenwasserstoffharz
  8.0 %  Bariumethylhexanoat (berechnet 100%)
  4.0 %  Calciumetylhexanoat (berechnet 100 %)
  4.0 %  Zinkethylhexanoat (berechnet 100%)
 12.0 %  Aromatenbenzin, Siedebereich 180 - 220°C
 66.0 %  Lackbenzin, Siedebereich 180 - 220°C
100.0 %
```

Wasseraufnahme von Holzprobekörpern, die im Doppelvakuumverfahren behandelt wurden, nach dreitägiger Lagerung unter Wasser: 1.3% (Gewichtszunahme).

## Beispiel 7 - Wässrige Holzschutzgrundierung  erfindungsgemäß

```
  7.5 %  Eisen(III)-octoat (berechnet 100%)
  4.0 %  Zinknaphthenat (berechnet 100%)
  7.5 %  Calciumnaphthenat (berechnet 100%)
  5.0 %  Alkylphenylethoxilat, EO ca. 20
  5.0 %  Dialkyldimethylammoniumchlorid
  5.0 %  Phenylglykol
  1.0 %  Furmecyclox
  1.0 %  Tetrachlorisophthalsäuredinitril
 64.0 %  Wasser
100.0 %
```

Diese Zubereitung ergibt eine hydrophobierende, bindemittelfreie, wasserverdünnbare Holzschutzgrundierung für den technischen Einsatz im Außenbereich (Zäune, etc.).

Für alle Vergleichsversuche in den beschriebenen Beispielen wurden Kiefernsplintholz-Probekörper (Pinus (sylvestris) verwendet. Die biologischen Versuche erfolgten gemäß den einschlägigen Europanormen.

Besondere Bedeutung bei der Formulierung von holzschützenden Anstrichstoffen und Grundierungen ist der Dauerwirksamkeit beizumessen. Nur eine erheblich verlängerte Gebrauchsdauer behandelter Hölzer rechtfertigt den Einsatz von bioziden Wirkstoffen. Durch die Verwendung der beschriebenen Metallseifen wird eine solche Verlängerung der Lebensdauer erreicht, einerseits durch eine hohe Penetration der Wirkstoffe in das Holz, andererseits durch einen herausragenden Schutz gegen Feuchtigkeit und Auswaschung.

Zudem erleichtert der Einsatz der Metallseifen in der erfindungsgemäßen Konzentration die Formulierung von schwer- oder nichtlöslichen Wirkstoffen in den üblichen Lösemitteln. Bei geeigneter Auswahl der Metallseifen, bzw. Metallseifengemische kann das Brandverhalten und im Brandfalle die Rauchentwicklung des behandelten Holzes beeinflußt werden. Die gezielte Lokalisierung der Wirkstoffe im Holz, deren Verteilung und Stabilisierung gegen Licht, Feuchte und Auswascheinflüsse ermöglicht zudem, die für den Langzeitschutz des Holzes notwendige Biozidmenge, bzw. -konzentration zu reduzieren.

Zur Herstellung der erfindungsgemäßen Metallseifen kommèn folgende Metalle oder deren Mischungen in Frage:

Aluminium, Calcium, Barium, Strontium, Zinn, Eisen, Kupfer, Mangan, Kobalt, Blei, Antimon, Nickel, Zink, Magnesium, Cadmium, Wismut, Zirkonium, Cer sowie die Seltenerdmetalle.

Zur Herstellung der erfindungsgemäßen Metallseifen kommen folgende Carbonsäuren oder deren Mischungen in Frage:

Gradkettige und verzweigte Carbonsäuren, gesättigte, cyclische Carbonsäuren, z.B. Hexahydrobenzoesäuren, Naphthensäuren sythetischen und natürlichen Ursprungs, Arylalkylcarbonsäuren, z.B. Phenylpropionsäuren oder deren Hydrierungsprodukte, z.B. Cyclohexylpropionsäure. Die Summe der Kohlenstoffatome soll bei 4 - 30 vorzugsweise bei 6 - 12 liegen.

Als Biozide (Fungizide und Insektizide) in Kombination mit den Metallseifen in den erfindungsgemäßen Holzschutzsystemen eignen sich beispielsweise:

Hexachlorcyclohexan

1,2-Benzisothiazolon-3

Kupfer-8-oxychinolin

2-Jodbenzoesäureanilid

Methylenbisthiocyanat

Synthetische Pyrethroide, z.B.:

( + )-3-(2,2-Dichlorvinyl-2,2-dimethyl)-cyclopropan-1-carbonsäure-3-phenoxybenzylester,

3-(2,2-Dichlorvinyl-2,2-dimethyl)-cyclopropan-1-carbonsäure-alpha-cyano-3-3-phenoxybenzylester,

3-(2,2-Dibromvinyl-2,2-dimethyl)-alpha-cyano-m-phenoxybenzyl-1R, 3R)-cyclopropan-carboxylat,

alpha-Cyano-3-phenoxybenzyl-isopropyl-2,4-chlorphenylacetat

0,0-Dimethyl-S-(N-phtalimido)-methyldithiophosphat

Chlorierte Phenole, z.B. Tetra- und Pentachlorphenol

Norbornen-dimethanohexa-chlorcyclosulfit

2-N-Octyl-4-isothiazolin-3-on

0,0-Dimethyl-S-(2-methylamino-2-oxoethyl)-dithiophosphat

1-(4-Chlorphenyl)-3-(2,6-di-fluorbenzoyl)-harnstoff

N-Methyl-1-naphthyl-carbamat

Organozinnverbindungen, z.B. Tributylzinnoxid und Tributylzinnben zoat

Tetrachlorisophthalsäure-dinitril

6,7,8,9,10-Hexachlor-1,5,5a,6,9,9a-hexahydro-6,9-methano-2,3,4-benzodioxothiepien-3-oxid

1-(1',2',4'-Triazolyl-1')-(1-(4'-chlorphenoxy))-3,3-dimethylbutan-2-on

1-(1',2',4'-Triazolyl-1')-(1-(4'-chlorphenoxy))-3,3-dimethylbutan-2-ol

2-Thiocyanomethyl-thiobenzothiazol

N-Tridecyl-2,6-dimethylmorpholin

Dimethylalkylaminsalze

2-sek.-Butyl-phenyl-N-methylcarbamat

Pyridin-2-thiol-1-oxid und Salze

Dithiocarbamate, Metall- und Aminsalze

Chlornitrobenzolderivate

Phenylphenole

Salicylanilid sowie halogenierte Derivate

8-Hydroychinolin sowie halogenierte Derivate

3,5-Dimethyl-tetrahydro-1,3,5-thiadiazinthion-(2)

2-(2-Furnayl)-1H-benzimidazol

Di-(guanidino-octyl)-amin

2-(Thiyzol-4-yl)-benzimidazol

2-Methyl-4-isothiazolin-3-on

5-Chlor-2-methyl-4-isothiazolin-3-on

Borderivate auf organischer und anorganischer Basis

Halogenessigsäuren sowie deren Amide und Ester

Quartäre Ammoniumverbindungen mit biozider Wirksamkeit

N-Cyclohexyl-N-methoxy-2,5-dimethylfuran-3-carbonsäureamid

N-Cyclohexyl-N-methoxy-2,5-dimethylfuran-3-carbonsäureamid

N,N-Dimethyl-N'-phenyl-(N'-fluormethylthio)-sulfamid

N,N-Dimethyl-N'-tolyl-(N'-fluormethylthio)-sulfamid

Benzimidazol-2-carbaminsäuremethylester

N-Trichlormethylthio-3,6,7,8-tetrahydrophthalimid

N-Trichlormethylthiophthalimid

2-iso-Propoxyphenyl-N-methylcarbamat

0,0-Diethyl-0-(alpha-cyanbenzylidenamino)-thiophosphat

0,0-Diethyl-0-3,5,6-trichlor-2-pyridil-thionophosphat

0,0-Diethyldithiophosphoryl-6-chlorbenzoxazolon

N-(1,1,2,2-Tetrachlorethylthio)-3,6,7,8-tetrahydrophthalimid

N-(3-(p-tert.-Butylphenyl)-2-methylpropyl)-cis-2,6-dimethylmorpholin

1-1[2-(2,4-dichlorophenyl)-1,3-dioxolan-2-yl]methyl]-1H-1,2,4-triazol

1[2-(2,4-Dichlorphenyl)-4-propyl-1,3-dioxolan-2-yl-methyl]-1-1H-1,2,4-triazol

α-tert-Butyl-α-(p-chlorphenethyl)-1H-1,2,4-triazol-1-ethanol

## Patentansprüche

1.  Holzschutzmittel, dadurch gekennzeichnet, daß es zur Verbesserung der Eindringtiefe der organischen Wirkstoffe in das behandelte Holz und zur Verminderung der Feuchtigkeitsaufnahme des behandelten Holzes 2 - 30% einer lösungsmittellöslichen Metallseife oder Metallseifenmischung enthält.

2.  Holzschutzmittel gemäß Anspruch 1, dadurch gekennzeichnet, daß die enthaltene Metallseife ein Carboxilat von 2, 3 oder 4-wertigen Metallen oder deren Gemische darstellt.

3.  Holzschutzmittel gemäß Anspruch 1, dadurch gekennzeichnet, daß die enthaltene Metallseife aus linearen, verzweigten oder isocyclischen Carbonsäuren mit 4 - 30 Kohlenstoffatomen, vorzugsweise mit 6 - 12 Kohlenstoffatomen oder deren Gemische hergestellt wird.

Europäisches
**Patentamt**

# EUROPÄISCHER
# RECHERCHENBERICHT

Nummer der Anmeldung

**EP 91 10 3827**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 208 773 (RÜTGERSWERKE AG)<br>* Seite 4, Zeile 20 - Seite 5, Zeile 3; Seite 7, Beispiel 3;<br>Seite 8, Beispiel 4; Patentansprüche *<br>— — — | 1-3 | B 27 K 3/50<br>B 27 K 5/00<br>B 27 K 3/34 |
| X | GB-A-2 168 394 (MOONEY CHEMICALS INC.)<br>* Seite 2, Zeilen 25-35; Seite 3, Zeilen 31-50; Seite 4, Tafel II; Patentansprüche *<br>— — — | 1-3 | |
| X | GB-A-5 434 87 (ETABLISSEMENTS BETTS AND BLAN-CHARD)<br>* Patentansprüche; linke Spalte, Zeilen 10-22 *<br>— — — | 1-3 | |
| X | US-A-2 315 064 (E.R. LITTMANN)<br>* Patentansprüche *<br>— — — | 1-3 | |
| X | US-A-4 783 221 (S.L. GROVE)<br>* Spalte 3, Zeilen 4-38; Patentansprüche *<br>— — — | 1-3 | |
| X | FR-A-1 438 485 (S.A. SEFA)<br>* Linke Spalte, Zeilen 7-11; Patentansprüche *<br>— — — | 1-3 | |
| A | EP-A-0 005 361 (CUPRINOL LTD)<br>* Seite 3, Zeile 15 - Seite 4, Zeile 4; Seite 10, Zeilen 11-23;<br>Seite 11, Zeilen 8-17; Patentansprüche *<br>— — — | 1-3 | RECHERCHIERTE SACHGEBIETE (Int. Cl.5)<br><br>B 27 K |
| A | GB-A-2 104 781 (THE BRITISH PETROLEUM CO.)<br>* Patentansprüche *<br>— — — — — | 1-3 | |

Der vorliegende Recherchenbericht wurde für alle Patentansprüche erstellt

| Recherchenort | Abschlußdatum der Recherche | Prüfer |
|---|---|---|
| Den Haag | 25 Juni 91 | DALKAFOUKI A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument